# EUROPÄISCHE PATENTSCHRIFT

(11) **EP 0 870 935 B1**
(45) Veröffentlichungstag und Bekanntmachung des Hinweises auf die Patenterteilung: **16.10.2002**
(21) Anmeldenummer: 98101673.6
(22) Anmeldetag: 31.01.1998
(51) Int. Cl.: F16B 12/50, F16B 7/18, F16B 7/04, A47B 47/00, E04B 1/58, F16B 12/40

(54) **Verbindungskörper zur Verbindung von Längselementen**
Connecting member for the connection of elongated elements
Dispositif d'assemblage pour des éléments allongés

(30) Priorität: 11.04.1997 DE 29706495 U
(43) Veröffentlichungstag der Anmeldung: 14.10.1998
(73) Patentinhaber: FESTO AG & Co, 73734 Esslingen (DE)
(72) Erfinder: Stoll, Kurt, Dr., 73732 Esslingen (DE); Moritz, Manfred, 73207 Plochingen (DE)
(74) Vertreter: Abel, Martin, Dipl.-Ing.

(56) Entgegenhaltungen:
- DE-U- 7 313 795
- DE-U- 29 616 635
- FR-A- 2 470 889

## Beschreibung

Die Erfindung betrifft einen Verbindungskörper zur Verbindung von Längselementen, der in einem Fügebereich in zwei aneinandersetzbare und mittels wenigstens einer Spanneinrichtung fest zusammenspannbare Halteteile unterteilt ist, wobei in dem Fügebereich mehrere von beiden Halteteilen gemeinsam definierte und zur klemmenden Aufnahme von Längenabschnitten der Längselemente dienende Halteaufnahmen vorgesehen sind, deren an wenigstens einem Halteteil vorgesehener Bestandteil von einer zum Fügebereich hin offenen nutähnlichen Haltevertiefung mit sich gegenüberliegenden Vertiefungsflanken gebildet ist.

Ein Verbindungskörper dieser Art geht aus dem deutschen Gebrauchsmuster 29616635.9 hervor. Die beiden Halteteile sind dort von Klemmschalen gebildet, die über Haltevertiefungen verfügen, welche sich paarweise zu Halteaufnahmen ergänzen. Die Halteteile lassen sich mit ihrer dem Fügebereich zugewandten längsseitigen öffnung voraus an das oder die zu verbindenden Längselemente ansetzen und mittels der Spanneinrichtungen lösbar zusammenspannen, so daß die Längselemente von den Grundflächen der Haltevertiefungen beaufschlagt und festgeklemmt werden. Die seitliche Stabilisierung erfolgt durch die sich gegenüberliegenden Vertiefungsflanken der Haltevertiefungen, deren Abstand so auf die Breite des in der Regel stabähnlichen und beispielsweise von einem stranggepreßten Profilelement gebildeten Längselements abgestimmt ist, daß geringfügiges Spiel vorhanden ist, das ein leichtes Aneinandersetzen der Längselemente und der Halteteile erlaubt.

Vor allem wenn eine Mehrzahl von Längselementen unter Verwendung mehrerer Verbindungskörper zu komplexeren Strukturen zusammengesetzt werden soll, erweist sich die Handhabung der Verbindungskörper manchmal als etwas umständlich. Häufig müssen bereits festgespannte Verbindungskörper nachträglich wieder gelockert werden, um letztlich die gewünschte Ausrichtung und Zuordnung der verschiedenen Längselemente zu erhalten. Auch bedarf es zum Ansetzen der Spanneinrichtungen einer gewissen Fingerfertigkeit, da mit einer Hand die Halteteile und die zu verbindenden Längselemente positioniert und gehalten werden müssen, um mit der anderen Hand die Spanneinrichtungen zu betätigen.

Es ist die Aufgabe der vorliegenden Erfindung, einen Verbindungskörper der eingangs genannten Art zu schaffen, der eine einfachere Montage ermöglicht.

Zur Lösung dieser Aufgabe ist vorgesehen, daß mindestens einer Haltevertiefung im Bereich wenigstens einer ihrer Vertiefungsflanken zumindest ein quer zur Flankenebene federelastisch nachgiebiges Klemmelement zugeordnet ist, das über die Flankenebene der Vertiefungsflanke vorsteht und dazu dient, das eingesetzte Längselement zur gegenseitigen Lagefixierung von Längselement und Halteteil seitlich zu beaufschlagen.

Auf diese Weise ist es möglich, das mit dem mindestens einen Klemmelement ausgestattete Halteteil am zugeordneten Längselement vorzufixierien, noch bevor mittels einer Spanneinrichtung beide Halteteile zusammengespannt werden. Das Ansetzen des oder der Halteteile an die zu verbindenden Längselemente ist daher erheblich vereinfacht, und ein versehentliches Herunterfallen von Halteteilen bei unachtsamer Montage kann ausgeschlossen werden. Außerdem besteht die Möglichkeit, den an ein oder mehrere Längselemente angesetzten Verbindungskörper bei noch loser Spanneinrichtung durch relatives Verschieben bezüglich des oder der zugeordneten Längselemente an einer gewünschten Stelle zu positionieren, wobei die durch die Klemmelemente hervorgerufene kraftschlüssige Verbindung bereits eine gewisse Stabilität der aus mehreren Längselementen aufzubauenden Struktur gewährleistet. Somit ist insgesamt sowohl die Montage des Verbindungskörpers an einem Längselement als auch der unter Verwendung von mehreren Verbindungskörpern erfolgende Aufbau gewünschter Strukturen, beispielsweise Gestelle oder Rahmen beliebiger Art, stark vereinfacht.

Vorteilhafte Weiterbildungen der Erfindung gehen aus den Unteransprüchen hervor.

Zweckmäßigerweise ist jeder an den Halteteilen vorgesehenen Haltevertiefung mindestens ein Klemmelement zugeordnet, wobei zweckmäßigerweise jede Haltevertiefung über zwei Klemmelemente verfügt, die sich im Bereich ihrer beiden seitlichen Vertiefungsflanken befinden. Auf diese Weise läßt sich ohne Beachtung einer besonderen Ausrichtung des Verbindungskörpers eine Montage unter den oben geschilderten Vorteilen durchführen.

Verfügen die Halteteile über vier mit Winkelabständen von 90° zueinander angeordnete Haltevertiefungen, die an einem zentralen Übergangsbereich mit ihren axial innenliegenden Mündungen ineinander übergehen, ist zweckmäßigerweise im Bereich der vier zwischen jeweils zwei Mündungen liegenden Eckpunkte jeweils ein den benachbarten Haltevertiefungen gemeinsam zugeordnetes Klemmelement vorgesehen. Die Klemmelemente sind dadurch jeweils in der Lage, Längselemente seitlich zu beaufschlagen, die in zweien der Haltevertiefungen angeordnet sind. Dabei ist sogar eine gleichzeitige Beaufschlagung möglich. Eine entsprechende Anordnung ist natürlich auch bei einer anderen Anzahl von Haltevertiefungen möglich, beispielsweise wenn pro Halteteil drei T-ähnlich zusammentreffende Haltevertiefungen vorgesehen sind.

Die Klemmelemente sind zweckmäßigerweise einstückiger Bestandteil des zugehörigen Halteteils und können als freistehende, federelastisch verformbare Klemmzapfen ausgebildet sein, die sich ausgehend von einem tiefer liegenden Bereich des Halteteils in Richtung zum Fügebereich erstrecken. Sie können sich insbesondere ausgehend von einer Grundfläche erstrecken, die mit der vom Nutgrund der Haltevertiefungen gebildeten Grundfläche in einer gemeinsamen Ebene liegt.

Selbstverständlich können eines oder beide Halteteile auch noch mit vollständigen Halteaufnahmen versehen sein, die insgesamt von Partien ein und desselben Halteteils definiert werden, so daß ohne weiteres auch eine dreidimensionale Verknüpfung von Längselementen über einen Verbindungskörper möglich ist.

Nachfolgend wird die Erfindung anhand der beiliegenden Zeichnung näher erläutert. In dieser zeigen:
- Fig. 1: eine erste Bauform des erfindungsgemäßen Verbindungskörpers, der an zwei T-ähnlich aneinanderstoßenden und fest miteinander zu verbindenden Längselementen montiert ist,
- Fig. 2: die Anordnung aus Fig. 1 vor dem Zusammenbau des Verbindungskörpers, wobei eines der Halteteile bereits an die zu verbindenden Längselemente angesetzt ist, welche letzteren zur Verbesserung der übersichtlichkeit nur strichpunktiert dargestellt sind,
- Fig. 3: eine Draufsicht auf den Fügebereich des in Fig. 2 unten liegenden Halteteils mit Blick gemäß Pfeilrichtung III aus Fig. 2 und
- Fig. 4: einen Querschnitt durch das Halteteil aus Fig. 3 gemäß Schnittlinie IV-IV aus Fig. 3.

Der in der Zeichnung abgebildete Verbindungskörper 1 kommt regelmäßig in einer Mehrzahl zur Anwendung, um beliebige Konstruktionen und Strukturen wie Regale, Gestelle, Rahmen oder Halterungen für Tische, Maschinen oder Fahrzeuge und vieles andere mehr zusammenzubauen. Auch im Modellbau ist der Verbindungskörper einsetzbar.

Die Verstrebungen derartiger Konstruktionen bestehen häufig aus stangen-, stab- oder rohrähnlichen Längselementen 2, 2', von denen in der Zeichnung zwei Stück exemplarisch abgebildet sind. In aller Regel handelt es sich um aus Aluminiummaterial bestehende Profilelemente, die durch Strangpressen hergestellt sind. Sie verfügen bevorzugt wie abgebildet über eine im Querschnitt gesehen rechteckförmige und insbesondere quadratische Außenkontur mit vier in Längsrichtung 3, 3' des betreffenden Längselementes 2, 2' verlaufenden Außenflächen 4.

Der Verbindungskörper 1 eignet sich zur festen Verbindung von winkelig zueinander ausgerichteten Längselementen 2, 2'. Hierzu bildet der jeweilige Verbindungskörper 1 an der dafür vorgesehenen Stelle einen ein-, zwei- oder drei-dimensionalen Verbindungsknoten, ausgehend von dem die miteinander verbundenen Längselemente 2, 2' in verschiedene Richtungen ragen.

Jedes der Längselemente 2, 2' wird unter Vermittlung einer und vorzugsweise mehrerer Spanneinrichtungen 5 am Verbindungskörper 1 kraftschlüssig lösbar festgeklemmt. Schraubverbindungen, die unmittelbar in die Längselemente 2, 2' eingreifen und die eine besondere spanende Bearbeitung der Längselemente 2, 2' erfordern, sind somit nicht vorhanden.

Der Verbindungskörper 1 weist wenigstens zwei in verschiedene Richtungen weisende, jeweils zur Aufnahme eines Längenabschnittes eines Längselements 2, 2' geeignete Halteaufnahmen 6 auf. Beim Ausführungsbeispiel enthält der Verbindungskörper 1 insgesamt vier Halteaufnahmen 6, die in einer gemeinsamen Ebene liegen. Ober eine äußere Mündung 7 sind sie jeweils zur Außenfläche des Verbindungskörpers 1 hin offen und erstrecken sich ausgehend von dieser ins Innere des Verbindungskörpers 1 hinein. Ihre Längsachsen 8 verlaufen in einer gemeinsamen Ebene und sind beim Ausführungsbeispiel mit Winkelabständen von 90° zueinander angeordnet, so daß sie sich in einem zentralen Punkt 12 im Innern des Verbindungskörpers 1 schneiden. Auf diese Weise ergibt sich eine Konstellation, bei der jeweils zwei koaxial aufeinanderfolgende Halteaufnahmen 6 fluchtend ineinander übergehen und insgesamt im Innern des Verbindungskörpers 1 zwei rechtwinkelig zueinander verlaufende und sich kreuzende Durchgänge 13 bilden.

Die Halteaufnahmen 6 sind entsprechend der Außenkontur der festzulegenden Längselemente 2, 2' konturiert und haben somit beim Ausführungsbeispiel einen rechteckförmigen und insbesondere quadratischen Querschnitt. Die festzulegenden Längselemente 2, 2' sind koaxial in die zugeordnete Halteaufnahme 6 eingesetzt. Dabei besteht die Möglichkeit, gleichzeitig vier rechtwinkelig zueinander in einer gemeinsamen Ebene verlaufende Längselemente mit ihren stirnseitigen Endabschnitten in den vier Halteaufnahmen 6 festzuklemmen. Möglich ist aber auch die aus den Figuren hervorgehende Anwendungsform, bei der ein Längselement 2 einen der Durchgänge 13 und die zu diesem gehörenden Halteaufnahmen 6 vollständig durchsetzt und auf entgegengesetzten Seiten aus dem Verbindungskörper 1 herausragt, während ein weiteres Längselement 2' lediglich mit einem stirnseitigen Längenabschnitt 14 in eine der beiden anderen Halteaufnahmen 6 eingesetzt ist, wobei er mit der Stirnseite gegen die zugewandte Außenfläche 4 des anderen Längselementes 2 stoßen kann. Die vierte Halteaufnahme 6 kann entsprechend belegt sein, ist bei der gezeigten Anwendung jedoch frei.

Der Verbindungskörper 1 ist durch eine Trennebene 15 in zwei separate Halteteile 16, 16' unterteilt. Diese lassen sich an der einen Fügebereich 17 definierenden Trennebene 15 aneinandersetzen und unter Vermittlung der Spanneinrichtungen 5 rechtwinkelig zur Trennebene 15 lösbar fest zusammenspannen. Der Fügebereich 17 durchsetzt die vorhandenen Halteaufnahmen 6 und unterteilt diese in Längsrichtung in jeweils zwei nutähnliche Haltevertiefungen 18, 18', von denen jeweils eine am einen der beiden Halteteile 16, 16' vorgesehen ist. Bevorzugt liegt eine mittige Unterteilung vor, so daß die einander jeweils zugeordneten Paare von Haltevertiefungen 18, 18' identisch ausgebildet sind und jeweils eine Hälfte des Querschnittes der betreffenden Halteaufnahme 6 bilden.

Jede Haltevertiefung 18, 18' ist zum Fügebereich 17 hin offen und hat außerdem zwei axial ausgerichtete Öffnungen 22, 23, eine an der Außenfläche 24 des Verbindungskörpers 1 ausmündende, axial außenliegende Öffnung 22 sowie eine im Innern des Verbindungskörpers 1 angeordnete, axial innenliegende Öffnung 23. Außerdem besitzt jede Haltevertiefung 18, 18' zwei sich mit Abstand gegenüberliegende und rechtwinkelig zum Fügebereich 17 verlaufende Vertiefungsflanken 25 und eine dem Nutgrund entsprechende, rechtwinkelig zwischen den beiden Vertiefungsflanken 25 verlaufende Grundfläche 26.

Mit ihren axial innenliegenden Öffnungen 23 gehen die Haltevertiefungen 18, 18' am jeweiligen Halteteil 16, 16' in einen zentralen Übergangsbereich 27 über, dessen Zentrum mit dem Bereich des zentralen Punktes 12 zusammenfällt.

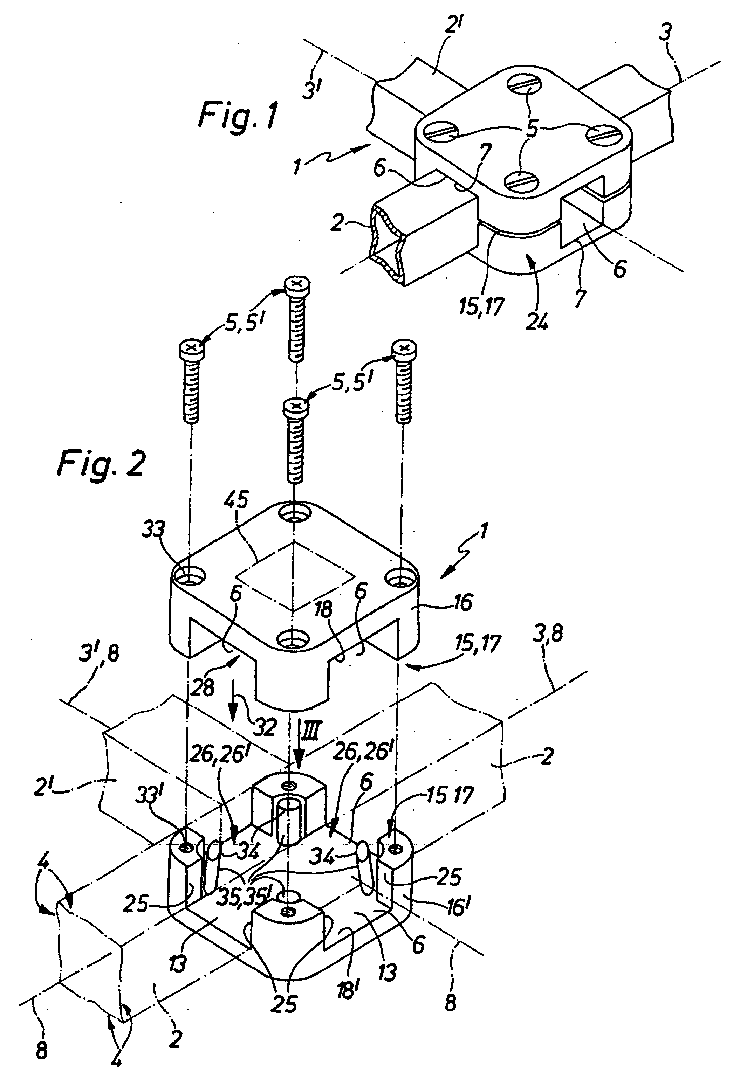

Um die beiden Längselement 2, 2' miteinander zu verbinden, werden an diese von entgegengesetzten Seiten her die beiden Halteteile 16, 16' mit der die Haltevertiefungen 18, 18' aufweisenden Innenseite 28 voraus angesetzt. Die Ansetzrichtung des einen Halteteils 16 ist in Fig. 2 durch Pfeil 32 markiert. Dabei übergreifen die Halteteile 16, 16' mit den Haltevertiefungen 18, 18' das jeweilige Längselement 2, 2' reiterähnlich über etwa die Hälfte ihres Umfanges.

Die derart an die Längselemente 2, 2' angesetzten Halteteile 16, 16' werden mittels der Spanneinrichtungen 5 rechtwinkelig zum Fügebereich 17 zusammengespannt. Beim Ausführungsbeispiel sind die Spanneinrichtungen 5 als Schraubverbindungseinrichtungen 5' ausgeführt und greifen außerhalb der Haltevertiefungen 18, 18' an den beiden Halteteilen 16, 16' an. Sie sind jeweils im Zwischenbereich zwischen zwei winkelmäßig benachbarten Haltevertiefungen 18, 18' angeordnet. Dort verfügen beide Halteteile 16, 16' über im zusammengefügten Zustand miteinander fluchtende Löcher 33, 33', von denen die Löcher 33' des einen Halteteils 16' mit einem Gewinde versehen sind. Somit können Schrauben 34 durch die Löcher 33 des anderen Halteteils 16 hindurchgeführt und in die erwähnten Gewinde eingeschraubt werden, wobei sie sich mit Köpfen an dem von ihnen durchsetzten Halteteil 16 abstützen und dadurch die beiden Halteteile 16, 16' fest zusammenspannen. Die Gewinde können unmittelbar in dem Halteteil 16' ausgebildet sein, sind jedoch zweckmäßigerweise Bestandteil von unverlierbar und drehfest in dem betreffenden Halteteil 16' verankerten Muttern. Letzteres vor allem dann, wenn es sich bei den Halteteilen 16, 16' wie im vorliegenden Falle um Kunststoffteile handelt.

Beim Zusammenspannen der Halteteile 16, 16' beaufschlagen diese mit den Grundflächen 26, 26' ihrer Haltevertiefungen 18, 18' die jeweils zugewandte Außenfläche der eingesetzten Längselemente 2, 2'. Die Grundflächen 26 stellen daher Spannflächen 26' dar, zwischen denen die Längselemente 2, 2' kraftschlüssig festgespannt und somit klemmend gehalten werden.

Der Querabstand zwischen den Vertiefungsflanken 25 der Haltevertiefungen 18, 18' ist geringfügig größer als die entsprechend gemessene Breite des festzuspannenden Längselementes 2, 2', so daß ein geringfügiges Spiel vorliegt, welches gewährleistet, daß ungeachtet der Herstellungstoleranzen der Längselemente 2, 2' eine Zusammenarbeiten mit dem Verbindungskörper 1 möglich ist. Es sind allerdings zusätzliche Maßnahmen getroffen, die es ermöglichen, jedes der Halteteile 16, 16' auch ohne Zusammenwirken mit dem zugeordneten anderen Halteteil so an wenigstens einem der zu verbindenden Längselemente 2, 2' vorab zu fixieren, daß ein kraftschlüssiger Zusammenhalt gegeben ist. Dies erleichtert vor allem in all den Fällen die Montage, bei denen das betreffende Halteteil nicht von oben her auf ein Längselement 2, 2' aufsetzbar ist, also beispielsweise beim von unten oder von der Seite her erfolgenden Ansetzen an ein Längselement. Diese Maßnahmen bestehen darin, daß mindestens einer Haltevertiefung 18, 18' im Bereich wenigstens einer ihrer Vertiefungsflanken 25 zumindest ein quer zur Flankenebene 34, 34' der Vertiefungsflanke 25 federelastisch nachgiebiges Klemmelement 35 zugeordnet ist, das in die Haltevertiefung 18, 18' vorsteht und das das in die zugeordnete Haltevertiefung 18, 18' eingesetzte Längselement 2, 2' seitlich federnd beaufschlagt, um dieses Längselement 2, 2' und das zugeordnete Halteteil 16, 16' gegenseitig in ihrer momentanen Relativlage zu fixieren. Beim Ausführungsbeispiel ist jeder Haltevertiefung 18, 18' jedes Halteteils 16, 16' im Bereich beider Vertiefungsflanken 25 jeweils ein Klemmelement 35 zugeordnet, das über die zugehörige Flankenebene 34, 34' in die betreffende Haltevertiefung 18, 18' hineinragt, so daß das eingesetzte Längselement 2, 2' an den Außenflächen 4 entgegengesetzter Längsseiten beaufschlagt wird.

Es wäre möglich, die Anordnung so zu treffen, daß jeder Haltevertiefung 18, 18' zwei eigene Klemmelemente 35 zugeordnet sind. Beim Ausführungsbeispiel ist hingegen eine besonders platzsparende und kostengünstige Ausführungsform gewählt, bei der jedes Klemmelement 35 gleichzeitig zwei winkelmäßig benachbarten Haltevertiefungen 18, 18' zugeordnet ist.

Die dementsprechend vorhandenen vier Klemmelemente 35 sind beim Ausführungsbeispiel jeweils im Bereich eines der vier Eckpunkte 36 plaziert, die zwischen den axial innenliegenden Öffnungen 23 zweier winkelmäßig jeweils benachbarter Haltevertiefungen 18, 18' liegen und in dem sich die Flankenebenen 34, 34', also die Ausdehnungsebenen der Vertiefungsflanken 25, treffen. Dabei sind die Klemmelemente 35 so ausgebildet, daß sie gleichzeitig über beide der sich kreuzenden Flankenebenen 34, 34' in die jeweils zugeordnete Haltevertiefung 18, 18' vorstehen.

Die Klemmelemente 35 sind zweckmäßigerweise einstückiger Bestandteil des zugehörigen Halteteils 16, 16' und sind beim Ausführungsbeispiel als freistehende, umfangsseitig freiliegende, federelastisch verformbare Klemmzapfen 35' ausgebildet, die ausgehend von einem tiefer liegenden Bereich des betreffenden Halteteils 16, 16' in Richtung des Fügebereiches 17 ragen. Dabei sind sie zweckmäßigerweise an einer Basisfläche 38 angeformt, die seitlich neben der Spannfläche 26' liegt und mit dieser zweckmäßigerweise in einer gemeinsamen Ebene liegt. Beim Ausführungsbeispiel weisen die Halteteile 16, 16' im Bereich der Eckpunkte 36 jeweils eine Aussparung 42 auf, die zu den benachbarten Haltevertiefungen und zum zentralen übergangsbereich 27 hin offen ist und deren Grundfläche die Basisfläche 38 bildet, die einen Klemmzapfen 35' trägt.

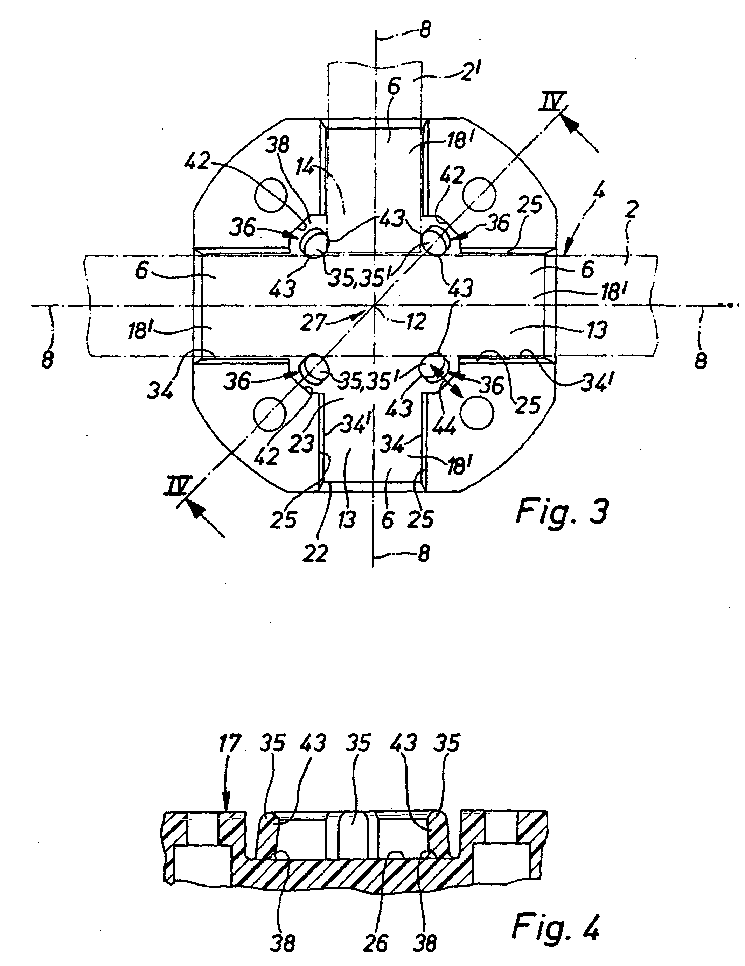

Wie aus Fig. 3 und 4 gut ersichtlich ist, verfügen die Klemmzapfen 35' bezogen auf die Tiefenrichtung der zugeordneten Haltevertiefungen 18, 18' über einen Schrägverlauf, indem sie im Bereich der Basisfläche 38 noch außerhalb der Haltevertiefungen 18, 18' liegen und zum freien Ende hin schräg nach innen zur zugeordneten Haltevertiefung 18, 18' verlaufen, um mit einer zur Basisfläche 38 beabstandeten Klemmpartie 43 seitlich geringfügig über die Vertiefungsflanke 25 hinaus in die benachbarte Haltevertiefung 18, 18' hineinzuragen.

Ein in eine Haltevertiefung 18, 18' eingesetztes Längselement 2, 2' beaufschlagt mit seinen Außenflächen 4 die Klemmpartien 43 der es beidseits flankierenden Klemmelemente 35, so daß diese geringfügig zur Seite gebogen werden und auf Grund ihrer federelastischen Eigenschaften das betreffende Längselement 2, 2' mit einer geringen Vorspannung beaufschlagen. Dadurch sind das betreffende Längselement 2, 2' und das zugeordnete Halteteil 16, 16' kraftschlüssig aneinander gehalten. Es ist insbesondere gewährleistet, daß die Halteteile 16, 16' auf diese Weise einzeln derart an den Längselementen 2, 2' festklemmbar sind, daß sie nicht auf Grund ihres Eigengewichts abfallen können. Das Anbringen des Verbindungskörpers 1 an eine bestehende Konstruktion von Längselementen 2, 2' ist dadurch erheblich vereinfacht.

Bei Klemmelementen 35, die der Beaufschlagung lediglich eines Längselements 2, 2' dienen, verläuft die federelastische Verformungsrichtung zweckmäßigerweise rechtwinkelig zur zugeordneten Flankenebene 34, 34'. Soll im Vergleich dazu eine insbesondere auch gleichzeitige Klemmung zweier in benachbarten Haltevertiefungen 18, 18' angeordneter Längselemente 2, 2' möglich sein, werden die Klemmelemente 35 zweckmäßigerweise in der aus Fig. 3 gut ersichtlichen Weise angeordnet, bei der für die federelastische Nachgiebigkeit eine durch Doppelpfeil angedeutete Vorzugsrichtung 44 vorliegt, die etwa mit der Winkelhalbierenden zwischen den benachbarten, im Bereich der Eckpunkte 36 zusammentreffenden Flankenebenen 34, 34' verläuft. Die Klemmzapfen 35' sind hier so angeordnet, daß sie zum freien Ende hin etwa in Diagonalenrichtung des eine quadratische Grundfläche aufweisenden zentralen Übergangsbereiches 27 nach innen laufen und im Bereich des freien Endes über eine derartige Breite verfügen, daß sie gleichzeitig in beide benachbarte Haltevertiefungen 18, 18' hineinragen. Jedes Klemmelement 35 verfügt hier also über zwei Klemmpartien 43. Dabei bietet sich für die Klemmelemente 35 eine asymmetrische längliche Querschnittsform an, die beim Ausführungsbeispiel elliptisch oder oval ausgeführt ist, wobei die längeren Seiten abgeflacht sein können. Auf diese Weise verfügen die Klemmpartien 43 über eine abgerundete Oberfläche.

Die Klemmelemente 35 sind praktisch Biegeelemente, die quer zu den Längsachsen 8 der Halteaufnahmen 6 elastisch federnd verbiegbar sind und beim Einsetzen eines Längselementes 2, 2' in die zugeordnete Haltevertiefung 18, 18' verbogen werden, so daß sie mit einer Rückstellkraft klemmend auf die Längselemente 2, 2' einwirken.

Die Auslegung der Klemmkräfte ist zweckmäßigerweise so gewählt, daß die Längselemente 2, 2' und die daran angesetzten Halteteile 16, 16' durch lediglich geringen Kraftaufwand relativ zueinander in Längsrichtung 8 der Halteaufnahmen 6 verschiebbar sind, solange die Spanneinrichtungen 5 noch nicht festgezogen sind. Dies bietet insbesondere die Möglichkeit, beim Aufbau einer aus Längselementen 2, 2' zusammengesetzten Konstruktion die benötigten Verbindungskörper 1 anzusetzen und auch bereits die Spanneinrichtungen 5, 5' im gelösten Zustand anzubringen, um anschließend die lediglich über die Klemmelemente 35 fixierten Verbindungskörper 1 an der gewünschten Stelle zu positionieren und dann, wenn die gesamte Konstruktion korrekt ausgerichtet ist, die Verbindungskörper 1 durch Festziehen der Spanneinrichtungen 5 festzuspannen.

Es versteht sich, daß sich die erfindungsgemäße Ausgestaltung auch bei Verbindungskörpern 1 verwirklichen läßt, bei denen wenigstens ein Halteteil 16, 16' mindestens eine weitere Halteaufnahme 45 aufweist, die allein an dem betreffenden Halteteil ausgebildet ist und rechtwinkelig zu dem Fügebereich 17 verläuft. Dabei kann es sich um eine längsgeschlitzte Halteaufnahme 45 handeln, deren beidseits des Längsschlitzes liegende Partien mittels einer Spanneinrichtung zusammenspannbar sind, um ein eingestecktes Längselement festzuklemmen. Derartige Bauformen wie auch weitere mögliche Abwandlungen des Verbindungskörpers 1 gehen aus dem deutschen Gebrauchsmuster 29616635.9 hervor.

## Patentansprüche

1. Verbindungskörper zur Verbindung von Längselementen (2, 2'), der in einem Fügebereich (17) in zwei aneinandersetzbare und mittels wenigstens einer Spanneinrichtung (5) fest zusammenspannbare Halteteile (16, 16') unterteilt ist, wobei in dem Fügebereich (17) mehrere von beiden Halteteilen (16, 16') gemeinsam definierte und zur klemmenden Aufnahme von Längenabschnitten der Längselemente (2, 2') dienende Halteaufnahmen (6) vorgesehen sind, deren an wenigstens einem Halteteil (16, 16') vorgesehener Bestandteil von einer zum Fügebereich (17) hin offenen nutähnlichen Haltevertiefung (18, 18') mit sich gegenüberliegenden Vertiefungsflanken (25) gebildet ist, **dadurch gekennzeichnet, daß** mindestens einer Haltevertiefung (18, 18') im Bereich wenigstens einer ihrer Vertiefungsflanken (25) zumindest ein quer zur Flankenebene (34, 34') federelastisch nachgiebiges Klemmelement (35) zugeordnet ist, das über die Flankenebene (34, 34') der Vertiefungsflanke (25) vorsteht und dazu dient, das eingesetzte Längselement (2, 2') zur gegenseitigen Lagefixierung von Längselement (2, 2') und Halteteil (16, 16') seitlich zu beaufschlagen.

2. Verbindungskörper nach Anspruch 1, **dadurch gekennzeichnet, daß** mindestens einer Haltevertiefung (18, 18') im Bereich beider Vertiefungsflanken (25) jweils ein Klemmelement (35) zugeordnet ist, derart, daß das eingesetzte Längselement (2, 2') auf entgegengesetzen Längsseiten beaufschlagt wird.

3. Verbindungskörper nach Anspruch 1 oder 2, **dadurch gekennzeichnet, daß** jeder Haltevertiefung (18, 18') im Bereich wenigstens einer und vorzugsweise im Bereich beider Vertiefungsflanken (25) mindestens ein Klemmelement (35) zugeordnet ist.

4. Verbindungskörper nach einem der Ansprüche 1 bis 3, **dadurch gekennzeichnet, daß** mindestens ein Halteteil (16, 16') wenigstens zwei quer zueinander verlaufende, mit ihren axial innenliegenden Öffnungen (23) in einem Übergangsbereich (27) aufeinandertreffende Haltevertiefungen (18, 18') aufweist, wobei im Bereich des Treffpunktes (36) der Flankenebenen (34, 34') der benachbart zueinander angeordneten Vertiefungsflanken (25) der beiden Haltevertiefungen (18, 18') ein beiden Haltevertiefungen (18, 18') gemeinsam zugeordnetes und über beide Flankenebenen (34, 34') vorstehendes Klemmelement (35) vorgesehen ist.

5. Verbindungskörper nach Anspruch 4, **dadurch gekennzeichnet, daß** das gemeinsam zugeordnete Klemmelement (35) so ausgebildet ist, daß es für die federelastische Nachgiebigkeit eine Vorzugsrichtung aufweist, die etwa mit der Winkelhalbierenden zwischen den aufeinandertreffenden Flankenebenen (34, 34') zweier benachbarter Haltevertiefungen (18, 18') zusammenfällt.

6. Verbindungskörper nach Anspruch 4 oder 5, **dadurch gekennzeichnet, daß** mindestens ein Halteteil (16, 16') vier mit Winkelabständen von 90° zueinander angeordnetete Haltevertiefungen (18, 18') aufweist, die an einem zentralen Übergangsbereich (27) innerhalb des Halteteils (16, 16') mit ihren axial innenliegenden Öffnungen (22) ineinander übergehen, wobei im Bereich der vier zwischen jeweils zwei Öffnungen (22) liegenden Eckpunkte (36) jeweils ein den zugehörigen Haltevertiefungen (18, 18') gemeinsam zugeordnetes Klemmelement (35) vorgesehen ist.

7. Verbindungskörper nach einem der Ansprüche 1 bis 6, **dadurch gekennzeichnet, daß** das mindestens eine Klemmelement (35) einstückiger Bestandteil des zugehörigen Halteteils (16, 16') ist.

8. Verbindungskörper nach Anspruch 7, **dadurch gekennzeichnet, daß** das mindestens eine Klemmelement (35) als freistehender, federelastisch verformbarer Klemmzapfen (35') ausgebildet ist, der sich ausgehend von einem tiefer liegenden Bereich des Halteteils (16, 16) in Richtung des Fügebereiches (17) erstreckt.

9. Verbindungskörper nach Anspruch 8, **dadurch gekennzeichnet, daß** der Klemmzapfen (35') bezogen auf die Tiefenrichtung der zugeordneten Haltevertiefung (18, 18') zu seinem freien Ende hin einen zur zugeordneten Haltevertiefung (18, 18') gerichteten abgebogenen oder schrägen Verlauf besitzt.

10. Verbindungskörper nach einem der Ansprüche 1 bis 9, **dadurch gekennzeichnet, daß** mindestens ein Klemmteil (35) am inneren axialen Endbereich der zugeordneten Vertiefungsflanke (25) vorgesehen ist.

11. Verbindungskörper nach einem der Ansprüche 1 bis 10, **dadurch gekennzeichnet, daß** sich jede Halteaufnahme (6) aus an beiden Halteteilen (16, 16') vorgesehenen und sich ergänzenden Haltevertiefungen (18, 18') zusammensetzt.

12. Verbindungskörper nach einem der Ansprüche 1 bis 11, **dadurch gekennzeichnet, daß** zur Verbindung von eine rechteckförmige Außenkontur aufweisenden Längselementen (2, 2') die Halteaufnahmen (6) und die zu deren Bildung beitragenden Haltevertiefungen (18, 18') einen rechteckförmigen Querschnitt aufweisen.

13. Verbindungskörper nach einem der Ansprüche 1 bis 12, **dadurch gekennzeichnet, daß** die Klemmelemente (35) so ausgebildet sind, daß ein in eine Haltevertiefung (18, 18') eingesetztes und von wenigstens einem Klemmelement (35) beaufschlagtes Längselement (2, 2') und das zugeordnete Halteteil (16, 16') durch geringen Kraftaufwand relativ zueinander in Längsrichtung (3, 3') des Längselementes (2, 2') verschiebbar und in einer gewünschten Relativposition kraftschlüssig positionierbar sind.

14. Verbindungskörper nach einem der Ansprüche 1 bis 13, **dadurch gekennzeichnet, daß** die mindestens eine Spanneinrichtung (5) als außerhalb der Halteaufnahmen (6) angeordnete Schraubverbindungseinrichtung (5') ausgeführt ist, mit der sich die Halteteile (16, 16') derart lösbar gegeneinanderspannen lassen, daß sie die eingesetzten Längselemente (2, 2') mit die Halteaufnahmen (6) begrenzenden und quer zu den Vertiefungsflanken (25) verlaufenden Spannflächen (26') beaufschlagen.

## Claims

1. Connecting body for joining longitudinal elements (2, 2'), divided, in a joining area (17), into two retaining parts (16, 16') capable of being joined together and of being clamped together by at least one clamping device (5), a plurality of retaining locations (6) defined jointly by the two retaining parts (16, 16') and used for the clamping location of sections of the longitudinal elements (2, 2') being provided in the joining area (17), the component provided in at least one retaining part (16, 16') being represented by a groove-like retaining recess (18, 18') open towards the joining area (17) and having recess flanks (25) facing each other, **characterised in that** at least one retaining recess (18, 18') is assigned, in the area of at least one of its recess flanks (25), at least one clamping element (35) resiliently flexible at right angles to the flank plane (34, 34'), said clamping element projecting beyond the flank plane (34, 34') of the recess flank (25) and exerting lateral pressure on the inserted longitudinal element (2, 2') for the mutual secure positioning of the longitudinal element (2, 2') and the retaining part (16,16').

2. Connecting body according to claim 1, **characterised in that** at least one retaining recess (18, 18') is assigned a clamping element (35) in the area of each of the two recess flanks (25), so that the inserted longitudinal element (2, 2') is put under pressure on opposite longitudinal sides.

3. Connecting body according to claim 1 or 2, **characterised in that** each retaining recess (18, 18') is assigned at least one clamping element (35) in the area of one and preferably in the area of both recess flanks (25).

4. Connecting body according to any of claims 1 to 3, **characterised in that** at least one retaining part (16, 16') has two retaining recesses (18, 18') extending at right angles to each other, their axially inner openings (23) meeting in a transition area (27), a clamping element (35) assigned jointly to both retaining recesses (18, 18') and projecting beyond both flank planes (34, 34') being provided in the area of the meeting point (36) of the flank planes (34, 34') of adjacent recess flanks (25) of the two retaining recesses (18, 18').

5. Connecting body according to claim 4, **characterised in that** the jointly assigned clamping element (35) is so designed that its resilient flexibility has a preferred direction approximately coinciding with the angle bisector between the meeting flank planes (34, 34') of two adjacent retaining recesses (18, 18').

6. Connecting body according to claim 4 or 5, **characterised in that** at least one retaining part (16, 16') is provided with four retaining recesses (18, 18') arranged at angles of 90° relative to each other and merging with their axially inner openings (22) into each other in a central transition area (27) within the retaining part (16, 16'), a clamping element (35) jointly assigned to the two associated retaining recesses (18, 18') being provided in the area of each of the four comers (36) lying between two openings (22).

7. Connecting body according to any of claims 1 to 6, **characterised in that** the at least one clamping element (35) is an integral part of the associated retaining part (16, 16').

8. Connecting body according to claim 7, **characterised in that** the at least one clamping element (35) is designed as a free-standing, resiliently deformable clamping peg (35') extending from a lower lying area of the retaining part (16, 16') towards the joining area (17).

9. Connecting body according to claim 8, **characterised in that** the clamping peg (35') follows a bent or inclined path towards the associated retaining recess (18, 18') at its free end in relation to the depth direction of the associated retaining recess (18, 18').

10. Connecting body according to any of claims 1 to 9, **characterised in that** at least one clamping element (35) is provided in the inner axial end area of the associated recess flank (25).

11. Connecting body according to any of claims 1 to 10, **characterised in that** each retaining location (6) is made up of complementary retaining recesses (18, 18') provided in the two retaining parts (16, 16').

12. Connecting body according to any of claims 1 to 11, **characterised in that** the retaining locations (6) and the retaining recesses (18, 18') contributing to their formation have a rectangular cross-section to join longitudinal elements (2, 2') having a rectangular external contour.

13. Connecting body according to any of claims 1 to 12, **characterised in that** the clamping elements (35) are so designed that a longitudinal element (2, 2') installed in a retaining recess (18, 18') and put under pressure by at least one clamping element (35) and the associated retaining part (16, 16') can be moved relative to each other in the longitudinal direction (3, 3') of the longitudinal element (2, 2') using very little force and then non-positively positioned in a desired relative position.

14. Connecting body according to any of claims 1 to 13, **characterised in that** the at least one clamping device (5) is designed as a screw connection device (5') lying outside the retaining locations (6) and enabling the retaining parts (16, 16') to be releasably clamped to each other, thus exerting pressure on the installed longitudinal elements (2, 2') with clamping surfaces (26') bounding the retaining locations (6) and extending at right angles to the recess flanks (25).

## Revendications

1. Corps de liaison pour la liaison d'éléments allongés (2, 2') qui, dans une zone de joint (17), est divisé en deux éléments de maintien (16, 16') qui peuvent être juxtaposés et serrés fermement ensemble au moyen d'au moins un dispositif de serrage (5), dans la zone du joint (17) étant prévus plusieurs logements de maintien (6) définis par les deux parties de maintien (16, 16') ensemble et servant au logement par serrage de tronçons de la longueur des éléments allongés (2, 2'), et dont la partie constitutive prévue sur au moins une partie de maintien (16, 16') est formée par un évidement de maintien (18, 18') de type rainure, ouvert vers la zone du joint (17), avec des flancs (25) de l'évidement se faisant face, **caractérisé en ce qu'**à au moins un évidement de maintien (18, 18') est associé, dans la zone d'au moins l'un de ses flancs (25), au moins un élément de serrage (35) flexible présentant l'élasticité d'un ressort transversalement au plan des flancs (34, 34'), lequel élément de serrage fait saillie du plan (34, 34') du flanc (25) de l'évidement et sert à agir latéralement sur l'élément allongé (2, 2') inséré, pour l'immobilisation réciproque de l'élément allongé (2, 2') et de la partie de maintien (16, 16').

2. Corps de liaison selon la revendication 1, **caractérisé en ce qu'**à au moins un évidement de maintien (18, 18') est associé, dans la zone de chacun de ses deux flancs (25), un élément de serrage (35), de manière que l'élément allongé (2, 2') inséré soit sollicité sur des côtés longitudinaux opposés.

3. Corps de liaison selon la revendication 1 ou 2, **caractérisé en ce qu'**au moins un élément de serrage (35) est associé à chaque évidement de maintien (18, 18'), dans la zone d'au moins un et de préférence dans la zone de ses deux flancs (25).

4. Corps de liaison selon l'une des revendications 1 à 3, **caractérisé en ce qu'**au moins une partie de maintien (16, 16') comporte au moins deux évidements de maintien (18, 18') qui s'étendent perpendiculairement l'un à l'autre et qui viennent se placer l'un sur l'autre par leurs ouvertures (23) situées axialement à l'intérieur, dans une zone de transition (27), un élément de serrage (35), qui est associé aux deux évidements de maintien (18, 18') et qui fait saillie des deux plans des flancs (34, 34'), étant prévu dans la zone du point de rencontre (36) des plans (34, 34') des flancs (25) disposés adjacents les uns aux autres des deux évidements de maintien (18, 18').

5. Corps de liaison selon la revendication 4, **caractérisé en ce que** l'élément de serrage (35) commun est conformé de manière à présenter, pour avoir la flexibilité élastique d'un ressort, un sens préférentiel qui coïncide approximativement avec la bissectrice de l'angle entre les plans des flancs (34, 34') convergeant l'un avec l'autre de deux évidements de maintien (18, 18') adjacents.

6. Corps de liaison selon la revendication 4 ou 5, **caractérisé en ce qu'**au moins une partie de maintien (16, 16') comporte quatre évidements de maintien (18, 18') disposés à des distances angulaires de 90° les uns des autres et qui se prolongent l'un l'autre par leurs ouvertures (22) situées axialement à l'intérieur, dans une zone de transition centrale (27) à l'intérieur de la partie de maintien (16, 16'), un élément de serrage (35) commun étant associé à l'évidement de maintien (18, 18') correspondant dans la zone de chacun des quatre angles (36) situés entre deux ouvertures (22).

7. Corps de liaison selon l'une des revendications 1 à 6, **caractérisé en ce que** le ou les éléments de serrage (35) font partie intégrante et d'un seul tenant de la partie de maintien (16, 16') correspondante.

8. Corps de liaison selon la revendication 7, **caractérisé en ce que** le ou les éléments de serrage (35) sont conformés en doigt de serrage (35') libre, déformable élastiquement, qui, partant d'une zone plus profonde de la partie de maintien (16, 16'), s'étend en direction de la zone du joint (17).

9. Corps de liaison selon la revendication 8, **caractérisé en ce que** le doigt de serrage (35') présente, par rapport à la direction de la profondeur de l'évidement de maintien (18, 18') associé, vers son extrémité libre, un profil recourbé ou oblique dirigé vers l'évidement de maintien (18, 18') associé.

10. Corps de liaison selon l'une des revendications 1 à 9, **caractérisé en ce qu'**au moins un élément de serrage (35) est prévu dans la zone terminale axiale intérieure du flanc de l'évidement (25) associé.

11. Corps de liaison selon l'une des revendications 1 à 10, **caractérisé en ce que** chaque logement de maintien (6) se compose d'évidements de maintien (18, 18') prévus sur les deux parties de maintien (16, 16') et se complétant.

12. Corps de liaison selon l'une des revendications 1 à 11, **caractérisé en ce que** pour la liaison d'éléments allongés présentant un contour extérieur rectangulaire, les logements de maintien (6), et les évidements de maintien (18, 18') contribuant à leur formation, présentent une section transversale de forme rectangulaire.

13. Corps de liaison selon l'une des revendications 1 à 12, **caractérisé en ce que** les éléments de serrage (35) sont conformés de manière qu'un élément allongé (2, 2') inséré dans un évidement de maintien (18, 18') et sur lequel agit au moins un élément de serrage (35), ainsi que la partie de maintien (16, 16') associée peuvent coulisser, sous l'effet de l'application d'une force réduite, l'un par rapport à l'autre dans la direction longitudinale (3, 3') de l'élément allongé (2, 2'), et peuvent être positionnés en force dans une position relative voulue.

14. Corps de liaison selon l'une des revendications 1 à 13, **caractérisé en ce que** le ou les dispositifs de serrage (5) sont réalisés en tant que dispositifs de liaison à vis (5') disposés à l'extérieur des logements de maintien (6), au moyen desquels les parties de maintien (16, 16') peuvent être serrées l'une contre l'autre, de manière séparable, de façon à agir sur les éléments allongés (2, 2') insérés, par des surfaces de serrage (26') qui délimitent les logements de maintien (6) et qui s'étendent transversalement aux flancs (25) des évidements.
